# EUROPÄISCHE PATENTSCHRIFT

(11) **EP 3 524 345 B1**
(45) Veröffentlichungstag und Bekanntmachung des Hinweises auf die Patenterteilung: **19.05.2021**
(21) Anmeldenummer: 19155704.0
(22) Anmeldetag: 06.02.2019
(51) Int. Cl.: B01J 19/30

(54) **FÜLL- UND/ODER BEWUCHSKÖRPER**
FILLING AND/OR CULTIVATION BODY
CORPS DE REMPLISSAGE ET/OU DE VÉGÉTATION

(30) Priorität: 13.02.2018 DE 102018103116
(43) Veröffentlichungstag der Anmeldung: 14.08.2019
(73) Patentinhaber: Christian Stöhr GmbH & Co. Elektro- und Kunststoffwaren KG, DE-96364 Marktrodach (DE)
(72) Erfinder: Stöhr, Henry, 96364 Marktrodach (DE); Stöhr, Michael, 96364 Marktrodach (DE)
(74) Vertreter: Pröll, Jürgen

(56) Entgegenhaltungen:
- EP-A1- 1 586 375
- BE-A- 481 212
- DE-A1- 2 521 442
- DE-A1-102008 029 384
- DE-C- 349 434

## Beschreibung

Die vorliegende Erfindung betrifft einen Füll- und/oder Bewuchskörper aus Kunststoff mit dem im Oberbegriff des Patentanspruches 1 angegebenen Merkmalen.

Erfindungsgemäße Füll- und/oder Bewuchskörper werden z. B. in Klärbecken von Kläranlagen oder Wasseraufbereitungsanlagen oder Trinkwasseraufbereitungsanlagen sowie in Aquakulturen, Nutz- und Zierfischzucht eingebracht, damit sich an den Füll- und/oder Bewuchskörpern Bakterien und/oder Kleinstorganismen ansiedeln, die das zu klärenden Abwasser im Klärbecken oder Wasserbecken reinigen. Die Füll- und/oder Bewuchskörper dienen als Grundfläche zur Besiedelung von Bakterien und Kleinstorganismen; der dadurch entstehende Biofilm dient zur Biologischen Reinigung der zu klärenden Abwasser im Klärbecken oder Wasserbecken.

So ist aus der DE 2 325 349 A ein Füllkörper zur regellosen Verteilung in einem biologischen Filterturm oder Filterbett bekannt. Dieser Filterkörper zeichnet sich durch eine als Begrenzungswand vorgesehene Materialwand mit mindestens zwei Öffnungen und mehreren in Längsrichtung vorgesehenen Innenwänden, die innerhalb der äußeren Begrenzungswand angeordnet sind, aus. Die Begrenzungswand und die sich radial erstreckenden Innenwände bilden dabei eine Einheit und weisen eine Oberfläche auf, an der eine biologische Aktivität auftreten soll. Die Innenwände weisen eine Oberfläche auf, die größer als die Oberfläche der äußeren Begrenzungswand ist, sodass auch diese Flächen als biologisch aktive Flächen genutzt werden. Die Innenwände werden aus vier diametralen Rippen gebildet, die sich über die gesamte Länge des Zylinders der äußeren Begrenzungswand erstrecken. Die diametralen Rippen weisen seitlich abstehende Rippen auf, die in einem spitzen Winkel zu den diametralen Rippen stehen, um so die Oberfläche zusätzlich zu vergrößern.

Aus EP 301 237 A1 ist ein Füllkörper zur Bildung von Besiedlungsflächen in Anlagen bekannt, der aus Kunststoff gefertigt ist und vorzugsweise einen zylindrischen Körpermantel mit wenigstens einer Leitfläche im Inneren aufweist. Die Leitfläche ist vollflächig ausgebildet, sodass diese den Körpermantel in mehrere Teilräume unterteilt.

Aus der US 4, 122, 011 A sind Füllkörper bekannt, die in Spritzgusstechnik aus Kunststoff hergestellt sind und trapezförmige Außen- und Innenwände aufweisen, die miteinander über Rippen verbunden sind. Eine zentrische Rippenanordnung aus sternförmig angeordneten Rippenwänden vermittelt dem Spritzgussteile eine höhere Stabilität. Äußere vorstehende Rippen ermöglichen es, einen Abstand zu benachbarten Füllkörpern zu sichern.

Aus der DE 44 27 576 A1 ist ein Füllmaterial, insbesondere zur biologischen Abwasserreinigung, offenbart. Das Füllmaterial wird vorzugsweise aus rohrförmigen Rundkörpern mit netzartiger strukturierter Mantelfläche gebildet. Es ist weiterhin mindestens ein in die Oberfläche des Füllmaterials vergrößerndes Element angeordnet, wobei dieses Element vorzugsweise streifenförmig ausgebildet ist.

Aus der DE 10 2009 036 971 A1 ist ein Sandwich-Trägermaterial zur Immobilisierung von Mikroorganismen bekannt, auf dem sich Biofilme dauerhaft etablieren können, die durch einen koextrudierten Schutzring lange Standzeiten auch in turbulenten aeroben und/oder anaeroben Flüssigkeitsströmen Aufweisen. Das Sandwich-Trägermaterial ist in Form von flachen und/oder gebogenen Scheiben und/oder hyperbolischen Paraboloiden mit einer porösen Oberfläche ausgestaltet, wobei die Dichte mit Hilfe mindestens eines koextrudierten nicht porösen Außenmantels zwischen 0,5 und 1,5 g/cm³ eingestellt ist, wobei dieser koextrudierte Außenmantel als Schutzring gegen Materialabrasion wirkt.

Aus der DE 10 2008 029 384 A1 ist ein Trägermedium zur Immobilisierung von Mikroorganismen bekannt. Hierzu kommt ein Trägermaterial als Aufwuchsfläche für einen Biofilm in einer Flüssigkeit zur Anwendung. Das Trägermedium bestehend aus einer Vielzahl von Kunststoffkörpern in Form von gebogenen Scheiben und/oder hyperbolischen Paraboloiden mit einer porösen Oberfläche, wobei der mittlere Porendurchmesser durch den Herstellungsprozess zwischen 10 bis 500 µm gezielt eingestellt werden kann, so dass die Dichte der Trägerelemente zwischen 0,7 und 2,5 g/cm³ eingestellt wird, sodass wiederum die Scheiben und/oder Paraboloide ein Verhältnis zwischen Oberfläche und Volumen zwischen 2.000 und 100.000 m²/m³ haben.

Aus der DE 25 21 442 ist ein Sattelkörper für die Anwendung als Füll- oder Kontaktelement in einem Bett einer Destillationsvorrichtung oder dgl. bekannt. Die Form ist ähnlich eines inneren Umfangshalbabschnittes eines hohlen Torus geformt. Die Sattelform weist außerdem eine Mehrzahl einteiliger Vorsprünge in Form von Spitzen auf, die Tropfstellen ausbilden, an der Flüssigkeiten ablaufen können.

Aus der BE 481.212 ist ein Füllkörper bekannt, dessen Seitenflächen geriffelt, gerillt oder profiliert ausgebildet sind, um eine große Kontaktfläche zu schaffen. Dabei werden die Füllkörper in einem Extrusions- bzw. Strangpressverfahren hergestellt.

Aus der DE 349434 ist ein zylindrisches Füllstück für Absorptionstürme bekannt, wobei jedes Füllstück an seiner zylindrischen Innenwand eine von oben bis unten hin verlaufenden Schraubenfläche trägt, die eine durch den Zylinder hindurchgehende Mittelöffnung frei lässt. Die Füllstücke sind so konzipiert, dass sie aufeinander gestapelt werden können. Dadurch verringern sich die seitlichen Kräfte auf die Außenwände des Absorptionsturms, in denen sie angeordnet sind.

Aus der EP 1 586 375 A1 ist ein Füllkörper bekannt, welcher insbesondere für Stoff- und/oder Wärmeaustauschkolonnen einsetzbar ist, die von einer Gas- und/oder Flüssigkeitsströmung durchsetzt werden. Der Füllkörper weist hierbei zwei einander abgewandte Stirnflächen auf und es ist ein Querschnitt des Füllkörpers gebildet, der mehrere nach außen gerichtete Vorsprünge aufweist. Der Füllkörper bildet eine gitterförmige Innenstruktur sowie mindestens sechs Vorsprünge aus.

Nachteilig bei den bekannten Füllkörpern ist, dass diese, sofern sie einen Bereich des Füllkörpers als geschützte Oberfläche aufweisen, damit der Biofilm nicht einfach mechanisch abgerieben werden kann, zumeist so ausgestaltet sind, dass der angesiedelte Biofilm nicht gut von dem zu klärenden Abwasser umströmt werden kann, sodass der angesiedelte Biofilm die Aufgabe der Reinigung des zu klärenden Abwassers gut erfüllen kann. Zugleich sollte aber auch eine möglichst große Oberfläche zur Ansiedlung des Biofilms bereitgestellt werden.

Es ist daher Aufgabe der Erfindung einen extrudierbaren Füllkörper aufzuzeigen, der eine große spezifische Oberfläche zum Bewuchs für den Biofilm vorweist, und zugleich einen Schutz von angesiedelten Bakterien und Kleinstorganismen, den sogenannten Biofilm, vor Abrieb schützt und zugleich auf einfache und kostengünstige Weise herstellbar ist.

Diese Aufgabe wird anhand der Ausgestaltung eines Füll- oder Bewuchskörpers gemäß den Merkmalen des Patentanspruches 1 gelöst.

Vorteilhafte Ausgestaltungen der Erfindung ergeben sich anhand der Unteransprüche und der weiteren Beschreibung.

Der Erfindungsgemäße Füll- und/oder Bewuchskörper weist eine sehr hohe spezifische biologische Besiedlungsfläche je Volumenmaß auf, dabei ist beim erfindungsgemäßen Füll- und/oder Bewuchskörper gegeben, dass dieser als aus Kunststoff extrudiert hergestellter Füll- und/oder Bewuchskörper, gut umströmbar ist und zugleich der Biofilm mechanisch vor Abrieb geschützt ist. Dadurch ist ein optimaler Bewuchs des Füll- und/oder Bewuchskörper durch den Biofilm zur Reinigung eines Klärbeckens oder Wasserbeckens gewährleistet. Die Füll- und/oder Bewuchskörper verhindern darüber hinaus, dass die Bakterien und Kleinstorganismen beim Austausch des zu klärenden Abwassers im Klärbecken mit diesem Abgelassen und damit ausgetauscht werden.

Der erfindungsgemäße Füll- und/oder Bewuchskörper besteht aus Kunststoff. Er besitzt einen Grundkörper aus Kunststoff mit einer Ober- und einer Unterseite. Der Grundkörper ist in sich gebogen oder verwunden. Zumindest in die Oberfläche der Oberseite oder der Unterseite des Grundkörpers sind die Oberseite oder der Unterseite des Grundkörpers nahezu vollständig durchlaufende Vertiefungen eingebracht. Durch die gebogen oder verwunden Form des Grundkörpers bildet dieser eine stabile Form aus. In den Vertiefungen können sich Bakterien und Kleinstorganismen ansiedeln, die zugleich vor Abrieb geschützt sind.

Durch diese Ausgestaltung des Füll- und/oder Bewuchskörper wird zum einen eine relativ stabile Form des Füll- oder Bewuchskörpers erreicht, zugleich ist aber ausreichend geschützter Oberflächenbereich in den Vertiefungen vorhanden, in die das zu klärende Abwasser strömen kann und an deren Flächen sich entsprechend Bakterien oder Kleinorganismen ansiedeln können.

Es ist vorgesehen, dass der Grundkörper nahezu die Form einer Halbschale eines Muschelgehäuses ausbildet, wobei in einer vorteilhaften Ausgestaltung die Form einer Fluss- oder Teichmuschel oder Flussperlmuschel oder einer Schlammmuschel nachgebildet ist. Damit erhält der Füll- und/oder Bewuchskörper eine besonders optimierte, umströmbare Form und Oberfläche.

Weiterhin ist vorgesehen, dass der Grundkörper nahezu der Form einer gebogenen, in sich verwundenen Scheibe und/oder hyperbolischen Paraboloiden oder eines Kartoffelchips nachgebildet ist. Auch durch diese Ausgestaltung erhält der Füll- und/oder Bewuchskörper eine besonders optimierte, umströmbare Form und Oberfläche.

Weiterhin ist vorgesehen, dass der Grundkörper nahezu der Form eines Blütenblatts oder eines Blatts einer Rose nachgebildet ist. Hierdurch erhält der Füll- und/oder Bewuchskörper eine besonders optimierte, umströmbare und zugleich auch formschöne Form und Oberfläche.

Vorteilhaft nach Patentanspruch 3 ist, dass die Vertiefungen geriffelt angeordnet sind und die Materialstärke des Grundkörpers nicht durchdringen. Hierdurch wird die Oberfläche des Grundkörpers, auf bzw. an der sich Bakterien oder Kleinorganismen ansiedeln können, vergrößert, ohne die Stabilität oder die Herstellbarkeit des Grundkörpers negativ zu beeinflussen.

Geriffelt im Sinne des Patentanspruches 3 hat die Bedeutung von mit feinen, parallelen Riefen, Rillen oder Rippen versehene Oberfläche. Eine geriffelte Oberfläche ist eine Oberflächen, die mit feinen, parallelen Riefen, Rillen oder Rippen (Graten) versehen ist.

Vorteilhaft nach Patentanspruch 4 ist, dass die Vertiefungen V-förmig oder eine U-förmig ausgebildet sind. Die V-Form oder U-Form dient der einfachen Produzierbarkeit des Grundkörpers und der Vergrößerung der Oberfläche des Grundkörpers zur Besiedelung mit Bakterien oder Kleinorganismen. Bis zu einer Eindringtiefe der Vertiefungen von 25 Prozent der Materialstärke des Grundkörpers bleibt die Verwindungssteifigkeit des Grundkörpers problemlos gewährleistet. Eine Eindringtiefe der Vertiefungen von 15 Prozent bis 55 Prozent gewährleistet die Verwindungssteifigkeit des Grundkörpers.

Vorteilhaft nach Patentanspruch 5 ist, dass der Grundkörper eine Länge zwischen zehn bis fünfundvierzig Millimeter, eine Breite von zehn bis fünfundvierzig Millimeter und eine Materialstärke zwischen null Komma fünf und zwei Millimeter besitzt. Durch diese Auswahl der Länge und Breite ist der Grundkörper auf die bekannten, in Kläranlagen eingesetzte Pumpen oder Rührwerke angepasst, sodass ein problemloser Betrieb gewährleistet wird.

Vorteilhaft nach Patentanspruch 6 ist, dass der Grundkörper aus einer einzigen Kunststoffmaterialart besteht, wobei als Kunststoffmaterialart PE, PP, HDPE oder LDPE zur Anwendung kommt, wobei vorzugsweise Recyclingkunststoffmaterial in Granulatform verwendbar ist. Natürlicherweise kann auch "Neuware" zum Einsatz kommen.

Durch die Verwendung von Recyclingkunststoffmaterial wird eine besonders effektive und hohe Ökobilanz erreicht. Der Einsatz von Kunststoffmaterial PE, PP, HDPE oder LDPE als reiner Kunststoff, das heißt kein Mischkunststoffmaterial, ermöglicht es, die Füll- und/oder Bewuchskörper nach Austausch zu recyceln.

Vorteilhaft nach Patentanspruch 7 ist, dass das Kunststoffmaterial durch Einsatz von Additiven bei der Verarbeitung eine mittlere Dichte von 0,85 bis 1,35 Gramm pro Kubikzentimeter, vorzugsweise von 0,92 bis 1,2 Gramm pro Kubikzentimeter besitzt. Dadurch wird eine besonders effektive und gute Verarbeitung des Kunststoffmaterials gewährleistet und die Grundkörper der Füll- und/oder Bewuchskörper werden in der gewünschten Form produziert.

In einer vorteilhaften Ausgestaltung nach Patentanspruch 8 ist vorgesehen, dass Poren auf den Außenflächen des Grundkörpers ausgebildet sind, die stochastisch verteilt angeordnet sind. Durch diese Anordnung von Poren wird die Oberfläche des Grundkörpers nochmals erhöht. Außerdem können sich in den Poren Bakterien oder Kleinorganismen ansiedeln. Dies verbessert den Bewuchs des Grundkörpers.

In einer vorteilhaften Ausgestaltung der Erfindung nach Patentanspruch 9 ist vorgesehen, dass die Poren bei der Herstellung eines Grundkörpers durch ein Aufschäumen des fließfähigen Kunststoffmaterials vor oder während der Herstellung mittels Extrusion erzeugbar sind.

Vorteilhaft nach Patentanspruch 10 ist, dass die Poren eine Größe zwischen 50 bis 500 Mikron besitzen.

Mikron hat die Bedeutung von Mikrometer. Ein Mikron entspricht einem Mikrometer.

Vorteilhaft nach Patentanspruch 11 ist, dass ein Grundkörper in einem Extrusionsverfahren herstellbar ist. Damit wird eine besonders schnelle und kostengünstige Produktion ermöglicht.

Vorteilhaft nach Patentanspruch 12 ist, dass die Vertiefungen mittels eines Schneidmessers eingebracht sind, welches den Grundkörper nach dem Austritt des plastifizierten Kunststoffes aus der Düse einer Kunststoffextrusionsmaschine abtrennt. Durch die Ausgestaltung des Schneidmessers kann die Form und Tiefe der Vertiefungen, der Abstand der Vertiefungen zueinander und auch die Formgebung des Grundkörpers gewählt werden.

In einer vorteilhaften Ausgestaltung der Erfindung nach Patentanspruch 13 ist gewählt, dass der Füll- und/oder Bewuchskörper zum Einsatz in Abwasserreinigungsanlagen oder Wasser- oder Trinkwasseraufbereitungsanlagen dient.

Vorteilhafte Ausgestaltungen der Erfindung ergeben sich anhand der Unteransprüche, der weiteren Beschreibung und insbesondere anhand der Beschreibung anhand eines konkreten Ausführungsbeispiels anhand von Figuren.

In den Figuren dargestellte Ausführungsbeispiele sind nicht maßstäblich und können bei konkreter Ausgestaltung oder Ausführung oder Ausführungsverfahren vom veranschaulichten abweichen.

Im Folgenden werden erfindungsgemäße Füll- und/oder Bewuchskörper anhand konkreter Ausführungsbeispiele beschrieben. Die nachfolgende Beschreibung anhand der konkreten Ausführungsbeispiele stellt keine Limitierung der Erfindung auf eines dieser konkreten Ausführungsbeispiele dar. Es wird bei der nachfolgenden Beschreibung figurenübergreifend für gleiche Elemente die gleichen Bezugszeichen verwendet. Dies dient der besseren Verständlichkeit der Beschreibung.

In den Figuren zeigt:
- FIG 1: eine Draufsicht auf einen Grundkörper eines Füll- und/oder Bewuchskörpers;
- FIG 2: eine Seitenansicht des Grundkörpers nach FIG 1;
- FIG 3: eine Draufsicht auf einen Grundkörper eines Füll- und/oder Bewuchskörpers; und
- FIG 4: eine Vergrößerung des in FIG 3 mit D bezeichneten Bereich des Grundkörpers eines Füll- und/oder Bewuchskörpers.

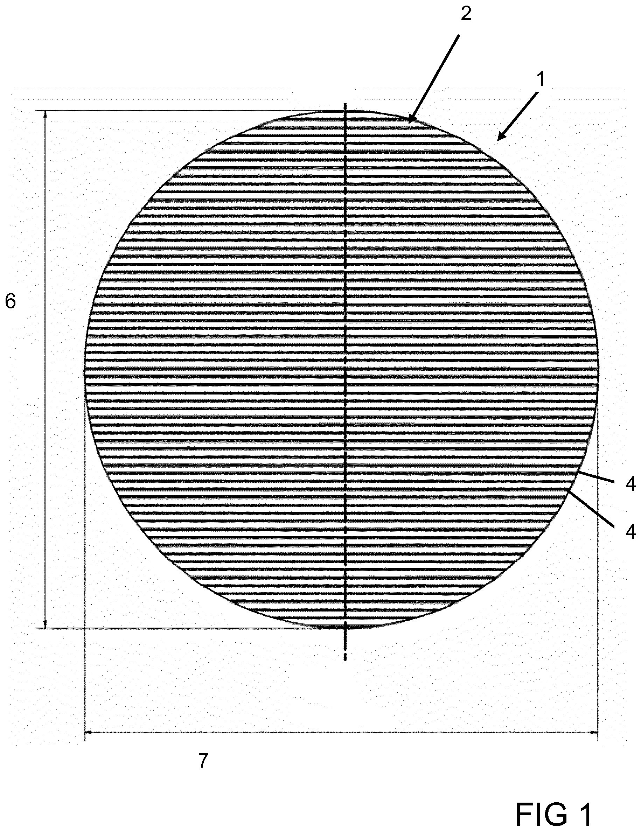

In FIG 1 ist eine Draufsicht auf die Oberseite 2 eines Grundkörpers 1 eines Füll- und/oder Bewuchskörpers dargestellt. Der Grundkörper 1 besitzt eine nahezu kreisrunde Unterseite 3 und besitzt eine wählbare Materialstärke. Der Grundkörper 1 besteht aus Kunststoff, vorzugsweise thermoplastischem Kunststoff. Die Form des Grundkörpers 1 ist in FIG 1 als Kugelsegment gewählt. Die Oberseite 2 des Grundkörpers 1 bildet eine Kalotte aus. In der Oberfläche der Oberseite 2 des Grundkörpers 1 sind Vertiefungen 4 eingebracht. Diese Vertiefungen 4 durchlaufen die Oberfläche der Oberseite 2 des Grundkörpers 1 parallel und äquidistant zueinander. Die Eindringtiefe der Vertiefungen 4 in die Oberfläche der Oberseite 2 des Grundkörpers 1 ist bei jeder Vertiefung 4 gleich.

In einer vorteilhaften Ausgestaltung der Erfindung ist die Eindringtiefe der einzelnen Vertiefungen 4 unterschiedlich gewählt, in Abhängigkeit der Materialstärke 5 des Grundkörpers 1 und der Breite der Vertiefungen 4.

Die Vertiefungen 4, deren Eindringtiefe in die Oberfläche, deren Form und deren Abstand zueinander, ist einstellbar und ist anhand des Einsatzzweckes zu wählen. Diese Wahl hat die in der Abwasserreinigungsanlage oder Wasser- oder Trinkwasseraufbereitungsanlage vorhandenen Anlagenkomponenten, wie Rührer, Pumpen, etc. zu berücksichtigen. Durch die Wahl der Vertiefungen 4 und die Wahl der Form und Dimensionierung des Grundkörpers 1, ist dieser für den konkreten Einsatzzweck optimierbar.

Der Einsatz des Grundkörpers 1 als Füll- und/oder Bewuchskörper in Abwasserreinigungsanlagen oder Wasser- oder Trinkwasseraufbereitungsanlagen dien dazu, um auf der Oberfläche des Grundkörpers 1 und in seinen Vertiefungen 4 Bakterien und/oder Kleinstorganismen anzusiedeln.

Die Oberfläche des Grundkörpers 1 mit den Vertiefungen 4 ist so gewählt, dass angesiedelte Bakterien und/oder Kleinstorganismen vor Abrieb geschützt sind.

Der Grundkörper 1 besitzt nahezu die Form einer Halbschale eines Muschelgehäuses, wobei dieses einer Fluss- oder Teichmuschel oder Flussperlmuschel oder Schlammmuschel nachgebildet ist.

Oder der Grundkörper 1 hat nahezu die Form einer gebogenen, in sich verwundenen Scheiben und/oder hyperbolischen Paraboloiden oder die Form eines Kartoffelchips oder eines Blütenblatts oder eines Blatts einer Rose.

Der Grundkörper 1 weist eine Länge 6, eine Breite 7 und eine Materialstärke 5 auf.

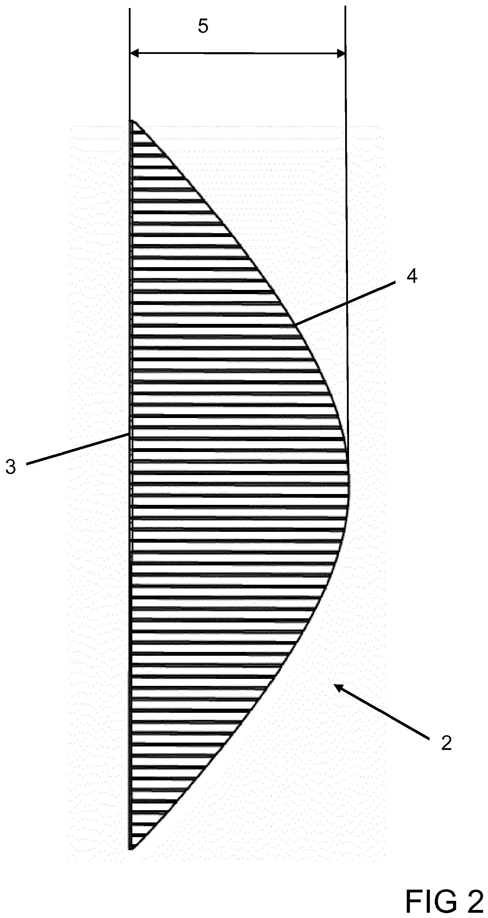

In FIG 2 ist eine Seitenansicht des Grundkörpers 1 aus FIG 1 dargestellt. Die Unterseite 3 ist plan. Die Oberseite 2 bildet eine Kalottenform aus und ist von gleichen, äquidistant zueinander angeordneten Vertiefungen 4 durchzogen. Der Grundkörper 1 besitzt, auf Grund der Kalottenform, eine über den Grundkörper 1 verlaufenden unterschiedliche Materialstärke 5. Die Materialstärke 5 ist aber stets mindestens dreimal so groß wie die Eindringtiefe der Vertiefungen 4 in die Oberfläche der Oberseite 2.

Die Vertiefungen 4 sind V-förmig oder U-förmig ausgebildet. Die Vertiefungen 4 nach FIG 2 besitzen eine Eindringtiefe in die Oberfläche der Oberseite 2 des Grundkörpers 1 von bis maximal fünfundzwanzig Prozent der Materialstärke 5 des Grundkörpers 1. Dadurch ist die Stabilität des Grundkörpers 1 gegeben.

In der Ausgestaltung nach FIG 1 und FIG 2 besitzt der Grundkörper einen Durchmesser von achtzehn Millimeter und eine Materialstärke 5 von einem Millimeter.

In einer weiteren Ausgestaltung der Erfindung sind die Vertiefungen 4 sowohl in die Oberfläche der Oberseite 2, als auch in die Oberfläche der Unterseite 3 des Grundkörpers 1 eingebracht.

Der Grundkörper 1 wird aus einer einzigen Kunststoffmaterialart hergestellt. Es hat sich als besonders vorteilhaft gezeigt, PE (Polyethylen), PP (Polypropylen), HDPE (Polypropylen mit hoher Dichte, sogenanntes High Density Polypropylen) oder LDPE (Low Density Polypropylen; Polypropylen mit geringer Dichte) einzusetzen.

In einer vorzugsweisen Ausgestaltung der Erfindung wird nur Recyclingkunststoffmaterial in Form von Granulat verwendet. Natürlicherweise kann stets "Neuware" verwendet werden, oder eine Mischung von Neuware und Recyclingkunststoffmaterial.

Um eine bessere Verarbeitung des Kunststoffmaterials, angepasst auf den Einsatzzweck des Grundkörpers 1 zur erreichen, wird das Kunststoffmaterial vor der Verarbeitung mit Additiven versetzt, sodass sich eine mittlere Dichte des Kunststoffmaterials von 0,85 - 1,35 Gramm/cm³ ergibt.

Es hat sich als vorteilhaft gezeigt, Poren stochastisch verteilt auf der Oberfläche des Grundkörpers 1 anzuordnen. Diese Poren können mittels eines Aufschäumprozesses des fließfähigen Kunststoffs, bei der Extrusionsherstellung des Grundkörpers 1, erzeugt werden.

Die Poren besitzen vorzugsweise eine Größe zwischen 50 bis 500 Mikron.

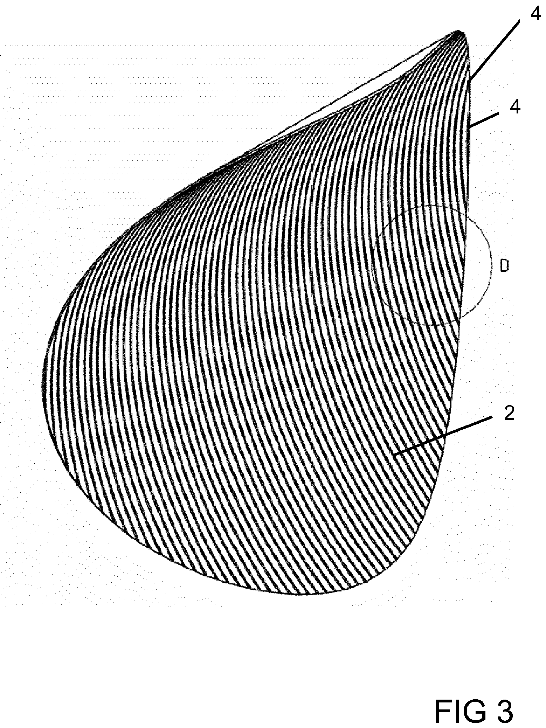

In FIG 3 ist eine perspektivische Darstellung eines weiteren Grundkörpers 1 dargestellt. Dieser Grundkörper 1 besitzt eine in sich gebogen bzw. verwunden Form auf. Er ähnelt der Form einer Gehäusehälfte einer Muschel.
In die Oberseite 2 sind wiederum Vertiefungen 4 eingebracht. Diese sind parallel zueinander und äquidistant zueinander angeordnet. Der Abstand der Vertiefungen 4 zueinander ist größer als die Breite der Vertiefungen 4.

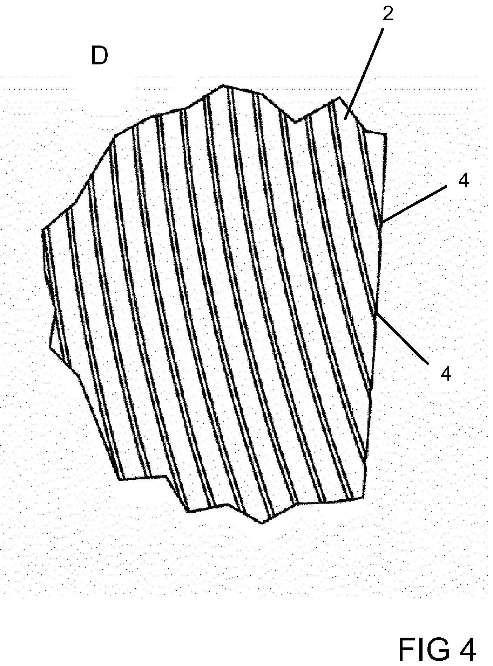

In FIG 4 ist der in FIG 3 mit D gekennzeichnete Bereich vergrößert dargestellt. Es ist in FIG 4 dargestellt, dass die Vertiefungen 4 parallel und äquidistant zueinander angeordnet sind und dass der Abstand der Vertiefungen 4 zueinander größer ist als die Breite der Vertiefungen 4 auf der Oberfläche der Oberseite 2. Ein Verhältnis der Breite der Vertiefungen 4 zum Abstand der Vertiefungen 4 zueinander von eins zu vier ist als besonders vorteilhaft anzusehen.

Der Grundkörper 1 wird in einer vorteilhaften Ausgestaltung der Erfindung in einem Kunststoffextrusionsverfahren hergestellt. Hierzu wird thermoplastischer Kunststoff in einem Extruder plastifiziert und über eine Schnecke an einer Düse des Extruders als Extrudat herausgepresst. Das Extrudat härtet nach dem Verlassen der Düse aus. Unmittelbar nach dem Auslass der Düse ist ein Schneidmesser angeordnet, das des Extrudat abschneidet bzw. abtrennt. Das Schneidmesser ist so ausgestaltet, dass dieses die Form des Grundkörpers 1 definiert und zugleich die Vertiefungen 4 in die Oberfläche der Oberseite 2 und/oder der Unterseite 3 des Grundkörpers 1 einbringt.

### Bezugszeichenliste

- 1: Grundkörper
- 2: Oberseite
- 3: Unterseite
- 4: Vertiefungen
- 5: Materialstärke
- 6: Lange
- 7: Breite

## Patentansprüche

1. Füll- und/oder Bewuchskörper, der einen Grundkörper (1) aus Kunststoff mit einer Ober- (2) und einer Unterseite (3) ausbildet, wobei der Grundkörper (1) in sich gebogen oder verwunden ist, **dadurch gekennzeichnet, dass** zumindest in die Oberfläche der Oberseite (2) oder der Unterseite (3) des Grundkörpers (1) nahezu vollständig durchlaufende Vertiefungen (4) eingebracht sind, wobei die Vertiefungen (4) äquidistant zueinander verlaufen und die Vertiefungen (4) eine Eindringtiefe in den Grundkörper (1) von fünfzehn bis zu fünfundfünfzig Prozent der Materialstärke (5) des Grundkörpers (1) aufweisen, und dass der Grundkörper (1) nahezu die Form einer Halbschale eines Muschelgehäuses ausbildet oder nahezu der Form einer gebogenen, in sich verwundenen Scheibe oder eines Kartoffelchips oder eines Blütenblatts oder eines Blatts einer Rose nachgebildet ist.

2. Füll- und/oder Bewuchskörper nach Patentanspruch 1, **dadurch gekennzeichnet, dass** der Grundkörper (1) nahezu einer Fluss- oder Teichmuschel oder Flussperlmuschel oder einer Schlammmuschel nachgebildet ist.

3. Füll- und/oder Bewuchskörper nach einem der vorangehenden Patentansprüche, **dadurch gekennzeichnet, dass** die Vertiefungen (4) geriffelt angeordnet sind und die Materialstärke (5) des Grundkörpers (1) nicht durchdringen.

4. Füll- und/oder Bewuchskörper nach einem der vorangehenden Patentansprüche, **dadurch gekennzeichnet, dass** die Vertiefungen (4) V-förmig oder U-förmig ausgebildet sind.

5. Füll- und/oder Bewuchskörper nach einem der vorangehenden Patentansprüche, **dadurch gekennzeichnet, dass** der Grundkörper (1) eine Länge (6) zwischen zehn bis fünfundvierzig Millimeter und eine Breite (7) zwischen zehn bis fünfundvierzig Millimeter und eine Materialstärke (5) zwischen ½ Millimeter bis zwei Millimeter besitzt.

6. Füll- und/oder Bewuchskörper nach einem der vorangehenden Patentansprüche, **dadurch gekennzeichnet, dass** der Grundkörper (1) aus einer Kunststoffmaterialart besteht und als Kunststoffmaterialart PE, PP, HDPE, oder LDPE zur Anwendung kommt, wobei vorzugsweise Recyclingkunststoffmaterial im Granulatform verwendbar ist.

7. Füll- und/oder Bewuchskörper nach einem der vorangehenden Patentansprüche, **dadurch gekennzeichnet, dass** das Kunststoffmaterial durch den Einsatz von Additiven bei der Verarbeitung eine mittlere Dichte von 0,92 bis 1,35 Gramm pro Kubikzentimeter besitzt.

8. Füll- und/oder Bewuchskörper nach einem der vorangehenden Patentansprüche, **dadurch gekennzeichnet, dass** Poren auf den Außenflächen bzw. der Oberseite (2) und/oder Unterseite (3) des Grundkörpers (1) ausgebildet sind, die stochastisch verteilt angeordnet sind.

9. Füll- und/oder Bewuchskörper nach Patentanspruch 8, **dadurch gekennzeichnet, dass** die Poren bei der Herstellung des Grundkörpers (1) durch ein Aufschäumen des fließfähigen Kunststoffmaterials erzeugbar sind.

10. Füll- und/oder Bewuchskörper nach einem der vorangehenden Patentansprüche, **dadurch gekennzeichnet, dass** die Poren eine Größe zwischen fünfzig bis fünfhundert Mikron besitzen.

11. Füll- und/oder Bewuchskörper nach einem der vorangehenden Patentansprüche, **dadurch gekennzeichnet, dass** der Grundkörper (1) in einem Extrusionsverfahren herstellbar ist.

12. Füll- und/oder Bewuchskörper nach einem der vorangehenden Patentansprüche, **dadurch gekennzeichnet, dass** die Vertiefungen (4) mittels eines Schneidmessers eingebracht sind, welche den Grundkörper (1) nach dem Austritt des plastifizierten Kunststoffes aus einer Düse einer Kunststoffextrusionsmaschine abtrennt.

13. Füll- und/oder Bewuchskörper nach einem der vorangehenden Patentansprüche, **dadurch gekennzeichnet, dass** der Füll- und/oder Bewuchskörper zum Einsatz in Abwasserreinigungsanlagen oder Wasser- oder Trinkwasseraufbereitungsanlagen dient.

## Claims

1. Filling and/or cultivation body which forms a base body (1) made of plastic with an topside (2) and an underside (3), wherein the base body (1) is bent or twisted in itself, **characterised in that** almost completely continuous recesses (4) are introduced at least into the surface of the topside (2) or the underside (3) of the base body (1), wherein the recesses (4) extend equidistantly from one another and the recesses (4) have a depth of penetration into the base body (1) of fifteen to fifty-five percent of the material thickness (5) of the base body (1), and **in that** the base body (1) forms almost the shape of a half shell of a mussel shell or is almost modelled on the shape of a curved, twisted disc or a potato chip or a flower petal or a petal of a rose.

2. Filling and/or cultivation body according to patent claim 1, **characterised in that** the basic body (1) is almost modelled as a freshwater mussel or freshwater pearl mussel or a mud mussel.

3. Filling and/or cultivation body according to one of the preceding patent claims, **characterised in that** the recesses (4) are arranged in a ribbed manner and do not penetrate the material thickness (5) of the base body (1).

4. Filling and/or cultivation body according to one of the preceding patent claims, **characterised in that** the recesses (4) are formed in a V-shape or U-shape.

5. Filling and/or cultivation body according to one of the preceding patent claims, **characterised in that** the base body (1) has a length (6) of between ten and forty-five millimetres and a width (7) of between ten and forty-five millimetres and a material thickness (5) of between ½ millimetre and two millimetres.

6. Filling and/or cultivation body according to one of the preceding patent claims, **characterised in that** the base body (1) consists of a type of plastic material and PE, PP, HDPE, or LDPE is used as the type of plastic material, wherein recycled plastic material can preferably be used in granular form.

7. Filling and/or cultivation body according to one of the preceding patent claims, **characterised in that** the plastic material has an average density of 0.92 to 1.35 grams per cubic centimetre due to the use of additives during processing.

8. Filling and/or cultivation body according to one of the preceding patent claims, **characterised in that** pores are formed on the outer surfaces or the topside (2) and/or underside (3) of the base body (1), which are arranged in a stochastically distributed manner.

9. Filling and/or cultivation body according to patent claim 8, **characterised in that** the pores can be produced during the manufacture of the basic body (1) by foaming the flowable plastic material.

10. Filling and/or cultivation body according to one of the preceding patent claims, **characterised in that** the pores have a size between fifty to five hundred microns.

11. Filling and/or cultivation body according to one of the preceding patent claims, **characterised in that** the basic body (1) can be produced in an extrusion process.

12. Filling and/or cultivation body according to one of the preceding patent claims, **characterised in that** the recesses (4) are introduced by means of a cutting blade, which cuts off the basic body (1) after the plasticised plastic has emerged from a nozzle of a plastic extrusion machine.

13. Filling and/or cultivation body according to one of the preceding patent claims, **characterised in that** the filling and/or cultivation body is for use in waste water treatment plants or water or drinking water treatment plants.

## Revendications

1. Corps de garnissage et/ou de végétation, qui forme un corps de base (1) en matière plastique avec un côté supérieur (2) et un côté inférieur (3), dans lequel le corps de base (1) est recourbé ou tordu sur lui, **caractérisé en ce que** des renfoncements (4) presque entièrement continus sont aménagés au moins dans la surface du côté supérieur (2) ou du côté inférieur (3) du corps de base (1), dans lequel les renfoncements (4) se déroulent de façon équidistante les uns aux autres et les renfoncements (4) présentent une profondeur de pénétration dans le corps de base (1) de quinze à cinquante-cinq pour cent de l'épaisseur de matériau (5) du corps de base (1), et **en ce que** le corps de base (1) a presque la forme d'une demi-coque d'un logement de coquille ou reproduit presque la forme d'un disque recourbé ou tordu sur lui ou d'une chips de pomme de terre ou d'un pétale de fleur ou d'un pétale d'une rose.

2. Corps de garnissage et/ou de végétation selon la revendication 1, **caractérisé en ce que** le corps de base (1) reproduit presque une mulette des rivières ou une anodonte des étangs ou une mulette perlière ou une moule de la vase.

3. Corps de garnissage et/ou de végétation selon l'une des revendications précédentes, **caractérisé en ce que** les renfoncements (4) sont agencés de façon cannelée et ne traversent pas l'épaisseur de matériau (5) du corps de base (1).

4. Corps de garnissage et/ou de végétation selon l'une des revendications précédentes, **caractérisé en ce que** les renfoncements (4) sont en forme de V ou en forme de U.

5. Corps de garnissage et/ou de végétation selon l'une des revendications précédentes, **caractérisé en ce que** le corps de base (1) possède une longueur (6) entre dix et quarante-cinq millimètres et une largeur (7) entre dix et quarante-cinq millimètres et une épaisseur de matériau (5) entre ½ millimètre et deux millimètres.

6. Corps de garnissage et/ou de végétation selon l'une des revendications précédentes, **caractérisé en ce que** le corps de base (1) est constitué d'un type de matière plastique et qu'en tant que type de matière plastique est utilisé le PE, le PP, le PE-HD ou le PE-LD, dans lequel une matière plastique recyclée sous forme de granulés peut de préférence être utilisée.

7. Corps de garnissage et/ou de végétation selon l'une des revendications précédentes, **caractérisé en ce que** la matière plastique possède une densité moyenne de 0,92 à 1,35 gramme par centimètre cube du fait de l'utilisation d'additifs lors de l'usinage.

8. Corps de garnissage et/ou de végétation selon l'une des revendications précédentes, **caractérisé en ce que** sur les surfaces extérieures ou les côté supérieur (2) et/ou côté inférieur (3) du corps de base (1) sont formés de pores qui sont agencés en distribution stochastique.

9. Corps de garnissage et/ou de végétation selon la revendication 8, **caractérisé en ce que** lors de la fabrication du corps de base (1) les pores peuvent être produits en faisant mousser la matière plastique à l'état d'écoulement.

10. Corps de garnissage et/ou de végétation selon l'une des revendications précédentes, **caractérisé en ce que** les pores possèdent une taille entre cinquante et cinq cents microns.

11. Corps de garnissage et/ou de végétation selon l'une des revendications précédentes, **caractérisé en ce que** le corps de base (1) peut être fabriqué par un procédé d'extrusion.

12. Corps de garnissage et/ou de végétation selon l'une des revendications précédentes, **caractérisé en ce que** les renfoncements (4) sont aménagés au moyen d'une lame de découpage, laquelle détache le corps de base (1) après la sortie de la matière plastique déjà plastifiée hors d'une buse d'une machine d'extrusion de matière plastique.

13. Corps de garnissage et/ou de végétation selon l'une des revendications précédentes, **caractérisé en ce que** le corps de garnissage et/ou de végétation sert pour être utilisé dans des stations de traitement des eaux usées ou des stations de traitement de l'eau ou de l'eau potable.
